# EUROPEAN PATENT APPLICATION

(11) **EP 4 250 670 A1**
(43) Date of publication of application: **27.09.2023**
(21) Application number: 22163980.0
(22) Date of filing: 24.03.2022
(51) Int. Cl.: H04L 45/12, H04W 40/10

(54) **METHOD FOR CERTIFYING COMPLIANCE WITH A SUSTAINABILITY CRITERION BY A TRANSMISSION OF A NETWORK PACKET, NETWORK, NETWORK DEVICE, TARGET APPLICATION AND TRAFFIC ENGINEERING DEVICE**

(71) Applicant: Siemens Aktiengesellschaft, 80333 München (DE)
(72) Inventor: Richerzhagen, Björn, 85055 Ingolstadt (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The invention is related to a method for certifying compliance with a sustainability criterion (1) by a transmission of a network packet (2) via network devices (3) of a network (4), wherein the network packet (2) is transmitted from a first network device (7) to a final network device (8) of the network devices (3), wherein the network packet (2) is sequentially transmitted along a selected path (9) by selected network devices (10). A respective tag (12) linking to a respective profile (11) of the respective selected network device (10) is associated with the network packet (2), wherein the respective profile (11) comprises at least one predefined sustainability related value. Upon reception of the network packet (2) by a target application (5), the tags (12) linking the respective profiles (11) to the network packet (2) are checked by means of a predefined validation process by the target application (5).

## Description

The present invention is directed to a method for certifying compliance with a sustainability criterion by a transmission of a network packet, a network, a network device of a network, a target application of a network and a traffic engineering device of a network.

Sustainability becomes more important in information and communication technology. In order to increase efficiency of communication networks, it may be necessary to log sustainability-related information associated with a transmission of a network packet through the network.

At present, there is no possibility to log sustainability-related information about a transmission. The sustainability-related information may be related to the devices utilized in the network to forward and/or to process the packet or to applications creating the respective network packets or making traffic engineering decisions. Traffic engineering decisions may comprise a routing, a prioritization, a redundancy and an endpoint selection. With the increasing importance of sustainability-related aspects in technical and business decisions, and increasing demand for reporting, automated methods to include such information in data traffic engineering are desirable for end-users and for network providers. Automated methods may improve reporting and may allow an optimization of a packet transmission through the network. Network providers and service providers may also provide new service offering based on sustainability-related aspects.

The current state of the art allows a coarse infrastructure-based assessment of sustainability in information and communications technology based on the classification of sustainability characteristics of individual network components. Classification of sustainability characteristics of individual network components may comprise a generation of an energy label for a base station or a switch, a product lifecycle analysis or a value chain analysis. Combined with a monitoring of load information associated to a given base station or network element. This information may be utilized to shutdown specific components during low-demand phases as used for base stations in cellular networks located in business centres during the nighttime. However, this information is not used for individual or package-based traffic engineering decisions.

A rough calculation of the energy consumption per bit as a means of classifying the energy efficiency of a network is conducted, for example, by mobile network operators for their 4G/5G networks. This calculation allows just a very rough approximation based on the previously mentioned infrastructure-based assessment and some load testing measurements during operation of the network. A respective sustainability-related value of an application or data transmitted by the application is not considered. The calculated information is not used for individual traffic engineering decisions.

Multi-Protocol Label Switching (MPLS) is a protocol used to forward packets in a connection-oriented way across a packet-switched network by assigning them a label once they enter the network or a part of the network and then use pre-defined routes associated to all packets with the respective label.

Software-defined Networking (SDN) controller-based traffic engineering is based on application-defined criteria like optimization of start-up latency or throughput according to end-user device type for video streaming, considering performance models of specific network devices like switches. This enables an optimization with regard to the number of flow rules installed on switches, avoiding overloads or expensive or slow CPU-based processing, if special-purpose hardware (TCAM) is already fully utilized. No sustainability-related criteria are included, and sustainability-related characteristics of devices are neither considered nor modeled. In addition, only a per-flow assessment is conducted.

Apart from a determination of a sustainability related value of a transmission it may be necessary to ensure a compliance with a predefined sustainability criterion by a transmission.

It is an object of the present invention to provide a solution to investigate a sustainability related value of a transmission of a single network packet sent through a network.

This objective is achieved by the respective subject-matter of the independent claims. Preferred embodiments and further implementations are subject-matter of the dependent claims.

A first aspect of the invention is related to a method for certifying compliance with a predefined sustainability criterion by a transmission of a network packet via network devices of a network.

The sustainability criterion may be related to a compliance of the network devices of the network, used for the transmission of the network packet with predefined sustainability criterions related to the network devices. The predefined sustainability criterion related to transmission can, for example, refer to a certain energy consumption during transmission. It may be envisaged that the predefined sustainability criterion in relation to the transmission is deemed to be met if compliance with certain sustainability requirements can be verified for all network devices involved in the transmission.

In a first step, the network packet to be send to a target application is created by a start application. The start application may be designed as a computer device or as a virtual entity operated by the computer device. In other words, the start application creates the network packet that has to be sent to the target application. The target application may be stored in a header of the network packet as a control information. The target application may comprise a computing unit or may be operated by a device, comprising the computing unit.

The network packet is transmitted to a first network device of the network devices of the network by the start application. In other words, the start application sends the network packet to the first network device of the network. The first network device can be a network device assigned to the start application from a variety of network devices on the network. The network devices may be designed as a hardware device or as a virtual node of the network. The network devices may comprise a computing unit or may be operated by a device, comprising the computing unit.

The network packet is received by the first network device. The network packet is transmitted from the first network device to a final network device of the network devices, wherein the network packet is sequentially transmitted along a selected path of selected network devices, connecting the first network device to the final network device by the selected network devices. In other words, the network packet is sent through the network along the selected path to the final network device in so called hops. The first network device and the final network device are connected by means of the selected path. The selected path comprises connections between selected network devices of the network devices. Therefore, the network packet is sent from the first network device to the final network device by the selected network devices. The final network device can be a network device assigned to the target application.

The network packet is sent to the target application by the final network device of the network devices of the network and received by the target application. In other words, the network packet is transmitted to the target application by the final network device. The target application may comprise a computing unit or may be operated by a device, comprising the computing unit.

Upon reception of the network packet by a respective selected network device along the path, a respective profile of the respective selected network device is linked to the network packet by the respective selected network device. In other words, the respective selected network devices link their respective profile to the network packet by means of a tag. A tag may be a link to the respective profile of the respective selected network device may be designed as a specific ID of the device or the profile or a digital signature, created by means of a private signature key of the respective selected network device. The tag may be included to the control information of the network packet or stored on a specific device of the network. The respective profile comprises at least one predefined sustainability related value of the respective selected network device. In other words, the respective profile describes a sustainability of the respective selected network device. The sustainability related value may be related to an energy consumption of the respective selected network device or a label certifying a specific energy efficiency of the respective selected network device. The respective profile may be stored in a memory of the respective selected network device and/or in a database of the network. At the arrival of the network packet at the target application, a chain of tags of each of the selected network devices of the path may be attributed to the network packet.

After the network packet is received by the target application, the tags linking the respective profiles to the network packet are checked by the target application using a predefined validation process. In other words, when the network packet is received by the target application, the target application reads the tags of the network packet. The target application checks the profiles linked to the network packet through the predefined validation process. The predefined validation process may comprise cryptographic examinations of the respective tags by means of a cryptographic key related to the respective profiles. The predefined validation process may include a step in which the sustainability related values are checked for compliance with a predefined sustainability criterion related to the network devices.

The compliance of the transmission of the network packet via the network devices of the network with the predefined sustainability criterion related to the transmission is certified by the target application, in the case that each of the tags of the network packet in the procedure is evaluated as valid through the predefined validation process.

The confirmation of the predefined sustainability criterion related to the transmission may comprise a setting of a parameter of the network packet to a specific value, a generation of a predefined entry in a log file by the target application, a digitally signing of a content of the network packet by the target application and/or a transmission of a pre-defined confirmation signal to the start application or a predefined device.

The invention has the advantage that the compliance with a predefined sustainability criterion by a transmission can be ensured.

The invention also comprises embodiments that provide features which afford additional technical advantages.

According to a further embodiment of the invention, the pre-defined validation process by the target application comprises a check of the sustainability related values of the profiles related to the selected network devices by the target application. The compliance of the transmission of the network packet with the predefined sustainability criterion related to the transmission is solely certified by the target application, if each of the sustainability related values of the profiles related to the selected network devices used for the transmission fulfil a predefined sustainability criterion related to the network devices. In other words: The certification of the compliance of the transmission of the network packet with the predefined sustainability criterion related to the transmission by the target application requires that each of the sustainability related values of the profiles related to the selected network devices used for the transmission fulfils the predefined sustainability criterion related to the network devices. As an example, the predefined sustainability criterion related to the network devices may require that an energy consumption of the network devices, described by the respective sustainability related values is within a predefined range or below a predefined value. The embodiment has the advantage that the certification may be related to specific aspects of sustainability.

According to a further embodiment of the invention, the at least one predefined sustainability related value of the respective selected network device, comprises an energy consumption level, Information about at least one material used in the respective selected network device, an age of the device, an expected remaining or total lifetime of the device, a supply chain characteristic, a fabrication method used to produce the respective selected network device and/or an energy-per-bit consumption in packet processing and forwarding of the respective selected network device. In other words, the profile of the respective selected network devices comprises the at least one predefined sustainability related value wherein the sustainability related value is related to at least one of the following features. The sustainability related value may comprise the energy consumption level of the respective selected network device. The energy consumption level may comprise an energy label and/or a calculated specific energy efficiency of the device. The sustainability related value may comprise the information about the at least one material used in the respective selected network device. The information may comprise a kind of the material, the absence of predefined materials and/or a label stating that all materials of the device are mined and/or produced according to a predefined list of methods. The sustainability related value may comprise the current age of the device and/or the expected remaining lifetime of the device and/or a total expected lifetime of the device. The sustainability related value may comprise a supply chain characteristic, comprising manufacturers of elements of the device and/or sources of the materials used in the device. The sustainability related value may comprise a fabrication method used to produce the respective selected network device and/or an energy-per-bit consumption of the device. The embodiment has the advantage that a compliance of the respective values of the selected network devices may be monitored for the transmission of the network packet.

According to a further embodiment of the invention, the profiles of the respective selected network device are digitally signed by a certificate of a trusted entity of a predefined trusted entity device. In other words, the profiles comprise a cryptographic digital signature created by means of the certificate of the trusted entity of the predefined trusted entity device. The profiles are checked through the predefined validation process by the target application, wherein the compliance of the transmission of the network packet with the predefined sustainability criterion related to the transmission is solely certified by the target application, if each of the profiles is considered valid. The embodiment has the advantage that the validity of the profiles can be confirmed by a public key of the cryptographic root key. The trusted entity may be designed as a computer device, configured to digitally sign the profiles by means of the cryptographic root key. Therefore, the replacement of a valid profile by a manipulated profile can be detected when checking the digital signature of the profile.

According to a further embodiment of the invention, the selected path of the selected network devices, connecting the first network device to the final network device, is selected by a traffic engineering device of the network, according to a predefined path selection method, depending on the at least one predefined sustainability related value of the respective selected network devices in order to comply with the sustainability criterion. In other words, the traffic engineering device may select the path depending on the at least one sustainability related value of the selected network devices. As an example, the traffic engineering device may compare possible paths connecting the first network device and the final network device. The traffic engineering device may select the path based on the sustainability related values of the respective network devices. The embodiment has the advantage that the path may be selected to comply with the sustainability criterion. The traffic engineering device may comprise a computing unit or may be operated by a device, comprising the computing unit.

According to a further embodiment of the invention, a sustainability parameter that demands fulfilment of the sustainability criterion is included in the network package by the start application. In other words: the start application adds the sustainability parameter to the network packet to indicate, that the transmission hast to comply with the sustainability criterion. The presence of the sustainability parameter is checked by the network devices. In other words, when the network packet is received by one of the network devices, the respective network device checks, if the sustainability parameter is set in the network packet. The network package is transmitted along the path by the network devices in case the sustainability parameter is included in the network packet. In other words, the respective network device sends the network packet along the path complying with the sustainability criterion, if the sustainability parameter is set in the network packet. The embodiment has the advantage, that the transmission complying with the sustainability criterion may be requested by the start application.

According to a further embodiment of the invention, a predefined sustainability related value, related to the transmission of the network packet is calculated by the target application from the at least one predefined sustainability related value of the profiles linked to the network packet. In other words, upon reception of the network packet the target application calculates the predefined sustainability related value of the transmission from the at least one predefined sustainability related value of the profiles linked to the network packet. The embodiment has the advantage that a sustainability of the transmission may be calculated by the target application.

According to a further embodiment of the invention, upon reception of the network packet by the target application, the tags linked to the network packet are checked through the predefined validation process by the target application by means of certificates of the respective profiles. In other words: the predefined validation process comprises a validation of the tags linked to the network packet by means of a cryptographic validation using certificates of the respective profiles. As an example, the profiles may provide certificates that may be used by the target application to validate the tags linking to the respective profile.

According to a further embodiment, the respective tags comprise a time-variant sustainability related value of the time of processing the packet by the respective selected network device. In other words, the tag comprises the reference to the respective profile of the respective selected network device as well as the time-variant sustainability related value. The time-variant sustainability related value is a time-variant sustainability related value related to the time of processing the packet by the respective selected network device. The time-variant sustainability related value may comprise a power consumption of the respective selected network device during the processing of the network package. The invention has the advantage that sustainability related values can be logged for the transmission of the network packet.

According to a further embodiment of the invention, the respective tags associated with the respective profiles are added by the respective selected network devices to a central database stored on a central device of the network. In other words, the tags comprising the links to the respective profiles are not added to control information of the network packet, but to a central database on a central device of the network. The central database may log the tags of the transmission of the respective network packet. The embodiment has the advantage that a size of the network packet does not increase during the transmission of the network packet.

According to another embodiment of the invention, the network packet is transmitted from at least one profileless selected network device, wherein a link to a substitute profile of the at least one profileless selected network device is added to the network packet by an administrator device associated with the profileless selected network device. In other words: the path of the transmission of the network packet comprises the at least one profileless network device. Therefore, the sequential transmission of the network package comprises a transmission of the network package by the at least one profileless network device. The at least one profileless network device may be unable to add a tag and/or may not have a respective profile. To allow a gapless documentation of the transmission, the tag to the substitute profile, assigned to the profileless network device may be added to the network packet by the responsible administrator device instead. The substitute profile may be designed like the profile, comprising the at least one sustainability related value of the profileless network device. The administrator device may be associated with one or more successive profileless selected network devices along the path. The administrator device may be a network device before or after the successive profileless selected network devices, configured to add the tag to his profile to the network packet as well as the tags to the substitute profiles of the profileless selected network devices. The embodiment has the advantage that compliance is ensured by the respective central device if the network devices themselves are not able to do so. Therefore, the network packet can be sent over subnets that may include network devices that are not configured to add a tag without breaking a chain of tags.

A second aspect of the invention is related to a System configured to carry out the method according to the first aspect of the invention.

The network is configured to certify compliance with a sustainability criterion by a transmission of a network packet via network devices of a network.

The network comprises a start application configured to create the network packet to be send to a target application. The start application is configured to transmit the network packet to a first network device of the network devices of the network. The network is configured to transmit the network packet from the first network device to a final network device of the network devices, in a sequential transmission along a selected path of selected network devices, connecting the first network device to the final network device, by the selected network devices. The final network device of the network devices of the network is configured to send the network packet to the target application received by the target application. The target application is configured to receive the network packet.

The selected network device is configured to associate a respective tag linking to a respective profile of the respective selected network device with the network packet upon reception of the network packet by a respective selected network device of the selected network device, wherein the respective profile comprises at least one predefined sustainability related value of the respective selected network device. The target application is configured to check the tags linking the respective profiles to the network packet by means of a predefined validation process by the target application upon reception of the network packet by the target application. The selected network device is configured to certify the compliance of the transmission of the network packet with the predefined sustainability criterion related to the transmission, in the case that each of the tags of the network packet in the procedure is evaluated as valid through the predefined validation process.

A third aspect of the invention is related to a network device of a network according to the second aspect of the invention.

A fourth aspect of the invention is related to a target application of a network according to the second aspect of the invention.

A fifth aspect of the invention is related to a traffic engineering device of a network according to the second aspect of the invention.

Further implementations of the network according to the second aspect of the invention, the network device according to the third aspect of the invention, the target application according to the fourth aspect of the invention, and the traffic engineering device according to the fifth aspect of the invention, follow directly from the various embodiments of the method according to the first aspect of the invention and vice versa. In particular, individual features and corresponding explanations relating to the various implementations of the method according to the first aspect of the invention can be transferred analogously to corresponding implementations of the network according to the second aspect of the invention, the network device according to the third aspect of the invention, the target application according to the fourth aspect of the invention, and the traffic engineering device according to the fifth aspect of the invention. In particular, the network according to the second aspect of the invention, the network device according to the third aspect of the invention, the target application according to the fourth aspect of the invention, and the traffic engineering device according to the fifth aspect of the invention is designed or programmed to carry out the method according to the first aspect of the invention or carries out the method according to the first aspect of the invention.

If it is mentioned in the present disclosure that network according to the second aspect of the invention, the network device according to the third aspect of the invention, the target application according to the fourth aspect of the invention, and the traffic engineering device according to the fifth aspect of the invention, are adapted, configured or designed to, et cetera, to perform or realize a certain function, to achieve a certain effect or to serve a certain purpose, this can be understood such that the component, beyond being usable or suitable for this function, effect or purpose in principle or theoretically, is concretely and actually capable of executing or realizing the function, achieving the effect or serving the purpose by a corresponding adaptation, programming, physical design and so on.

A computer program comprising instructions is provided. When the instructions are executed by a network according to the invention, in particular by the network devices of the network for example by at least one computing unit of a network device, the instructions cause the network to carry out a method according to the invention.

According to a further aspect of the invention, a computer-readable storage medium storing a computer program according to the first aspect of the invention is provided.

The computer program as well as the computer-readable storage medium may be denoted as respective computer program products comprising the instructions.

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

In the following, the invention will be explained in detail with reference to specific exemplary implementations and respective schematic drawings. Therein,
- FIG 1: shows a schematic illustration of a method for certifying compliance with a sustainability criterion;
- FIG 2: shows a schematic illustration of a network;
- FIG 3: shows a schematic illustration of a network; and
- FIG 4: shows a schematic illustration of a network device.

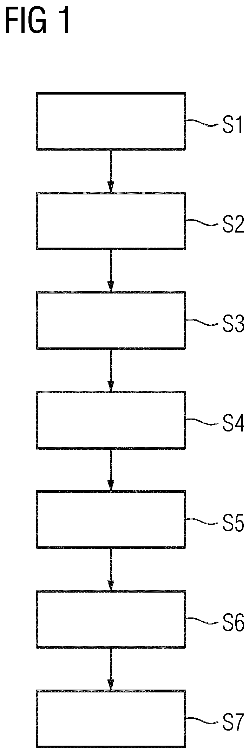

FIG 1 shows a schematic illustration of a method for certifying compliance with a sustainability criterion.

In a first step S1, a network packet 2 to be sent to a target application 5 is created by a start application 6. The network packet 2 may comprise payload and control information. The control information of the network packet 2 may comprise a source of the network packet 2 and the target application 5 as a destination. The control information may also comprise a sustainability parameter indicating that the network packet 2 has to be send through a network 4 according to sustainability related aspects in order to comply with the sustainability criterion 1. The sustainability criterion 1 may demand, that only network devices 3 of the network 4 that satisfy a predefined sustainability related value 13 are used for the transmission of the network packet 2.

In a second step S2, the network packet 2 may be transmitted to a first network device 7 of the network devices 3 of the network 4 by the start application 6. The first network device 7 may be designed as a switch, configured to connect the start application 6 to other network devices 3. The first network device 7 may read the parameter and may send the network packet 2 to one selected network device 10 of a path 9 that complies with the sustainability criterion 1. The path 9 may be stored in a path 9 file of the first network device 7 created by a traffic engineering device 17 of the network 4, or in the traffic engineering device 17.

In a third step S3, the network packet 2 may be transmitted from the first network device 7 to a final network device 8 of the network devices 3. The transmission may be performed by the network devices 3 selected network devices 10 of the network 4 along the selected path 9 of the network devices 3 selected network devices 10 connecting the first network device 7 to the final network device 8. The path 9 of the network devices 3 may be determined by the traffic engineering device 17 of the network 4. The traffic engineering device 17 may submit predefined routing paths 9 and send the predefined routing paths 9 to the network devices 3. The selected paths 9 may be created by the traffic engineering device 17 in order to comply this predefined sustainability criterion 1.

Upon reception of the network packet 2 by a respective selected network device 10 of the network devices 3 selected network devices 10, a respective profile 11 of the respective selected network device 10 may be linked to the network packet 2 by the respective selected network device 10. The respective selected network device 10 may link the respective profile 11 to the network packet 2 by means of a tag 12. The tag 12 may comprise a digital cryptographic signature generated by means of a cryptographic key of the respective profile 11 and/or a time of processing and/or a MAC-address of the respective profile 11 or network device 3. Each of the tags 12 may be added to a control information in a header of the network packet 2, or to a database 20 in a central device 21 of the network 4. The tags 12 of the respective network devices 3 selected network devices 10 along the path 9 may form a chain of tags 12. The chain may allow a tracking of the network packet 2 through the network 4. The respective profiles 11 may comprise at least one predefined sustainability related value 13 of the respective network devices 3 selected network devices 10. The at least one predefined sustainability related value 13 may comprise a power consumption of the respective selected network device 10. The tags 12 may comprise a time-variant sustainability related value 19 like a power consumption of the respective network devices 3 selected network devices 10 during the processing of the network packet 2. The network packet 2 may be received by a final network device 8 of the network devices 3 and transmitted to the target application 5 by the final network device 8 of the network 4.

Upon reception of the network packet 2 by the target application 5, the tags 12 may be checked by profiles 11 linked to the network packet 2 may be checked by means of a predefined validation process by the target application 5. The predefined validation process may comprise a validation of the tags 12 by means of cryptographic processes.

Upon reception of the network packet 2 by the target application 5, the tags 12 linking the respective profiles 11 to the network packet 2 may be checked by means of a predefined validation process by the target application 5. During the validation process, the tags 12 may be checked by means of cryptographic keys of the respective profiles 11. The validation process may comprise a validation of the respective profiles 11 by means of a root key, used to digitally sign the profiles 11. The compliance of the transmission of the network packet 2 with the predefined sustainability criterion 1 related to the transmission may certified by the target application 5, in the case that each of the tags 12 of the network packet 2 in the procedure is evaluated as valid through the predefined validation process.

The certification may comprise a digitally signing of the network packet 2 by the target application 5 or a transmission of a predefined signal to the start application 6.

A predefined sustainability related value 14 related to the transmission of the network packet 2 may be calculated by the target application 5 in the case that each of the profiles 11 linked to the network packet 2 is evaluated as valid through the validation process. The sustainability related value 14 related to the transmission of the network packet 2 may be calculated from the sustainability related value 13 of the profiles 11 related to the network devices 3 selected network devices 10.

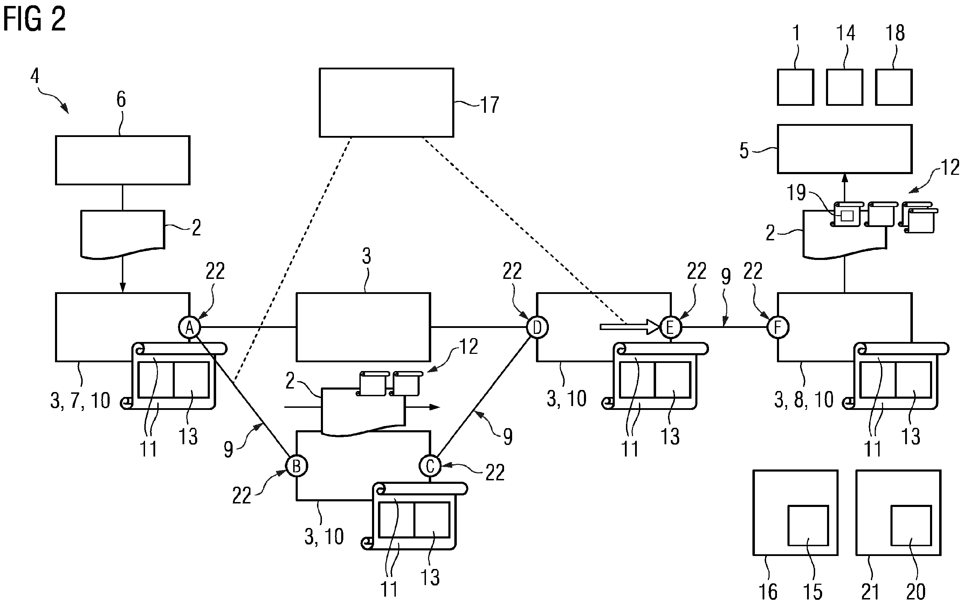

Fig. 2 shows a schematic illustration of a network 4.

The network 4 may comprise network devices 3 that may be configured to receive network 4 packets 2 from previous network devices 3 along a path 9 and to send the network packet 2 to following network devices 3 along the path 9. The network 4 may comply with the Transmission Control Protocol/Internet Protocol or another communication protocol. The network 4 may comprise a traffic engineering device 17 that may be configured to determine paths 9 connecting the first network device 7 to a final device. The selection of a path 9 for a network packet 2 may depend on the target application 5 of the network packet 2 and a predefined sustainability criterion 1. In order to select a path 9 that satisfies the sustainability criterion 1, the traffic engineering device 17 may read out profiles 11 of the network devices 3. The profiles 11 may contain the at least one sustainability related value 13 like an energy consumption of the respective network device 3. Therefore, the traffic engineering device 17 may be configured to select a path 9 with minimized energy consumption. The selection of a path 9 fulfilling the predefined sustainability criterion 1 may be indicated by the first network device 7 or by a sustainability parameter 31 in the network packet 2. The profiles 11 may be stored on the network devices 3. The network devices 3 may be configured to add a respective tag 12 to the network packet 2 upon reception of the network packet 2. The tag 12 may comprise a source interface of the previous interface, the receiving interface of the network device 3 and a sending interface of the network device 3. The interfaces may be identified by means of a respective MAC address. The tag 12 may also comprise an ID that allows a link of the tag 12 to a specific profile 11. The tag 12 may comprise a digital signature that may allow a validation of the respective tag 12. As each of the network devices 3 may add a respective tag 12 to the network packet 2, the network packet 2 may comprise a chain of tags 12 when it is received by the target application 5.

In order to verify that the predefined sustainability criterion 1 is fulfilled by the transmission, the target application 5 may be configured to verify the tags 12 by means of cryptographic procedures through a predefined validation process. The verification may be performed by downloading the profiles 11 from the central device 21 or by means of a central key used by a certification authority to verify the tags 12. In case a network device 3 does not add a tag 12 to a profile 11 or in case a wrong tag 12 or a tag 12 of a wrong profile 11 is added, the respective verification may fail, and the target application 5 may deny the verification of the transmission.

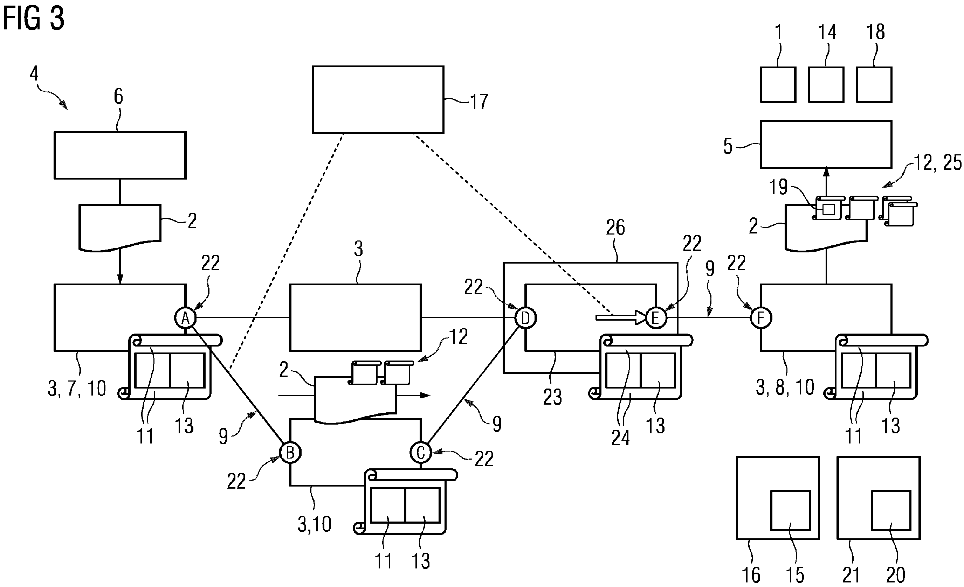

FIG. 3 shows a schematic illustration of a network 4. It may be possible that the network packet 2 may be sent along a path 9 that may comprise network devices 3 without profiles 11. Therefore, a chain of tags 12 may be interrupted by the network device 3. In order to provide a chain of tags 12, a central device 21 linked to the respective network device 3 may store a substitute profile 24. The central device 21 may add a tag 25 to the substitute profile 24 in order to replace the profile 11 of the respective profileless selected network device 23. Therefore, the sustainability of the respective network device 3 may be ensured by the central device 21 or an administrator device 26.

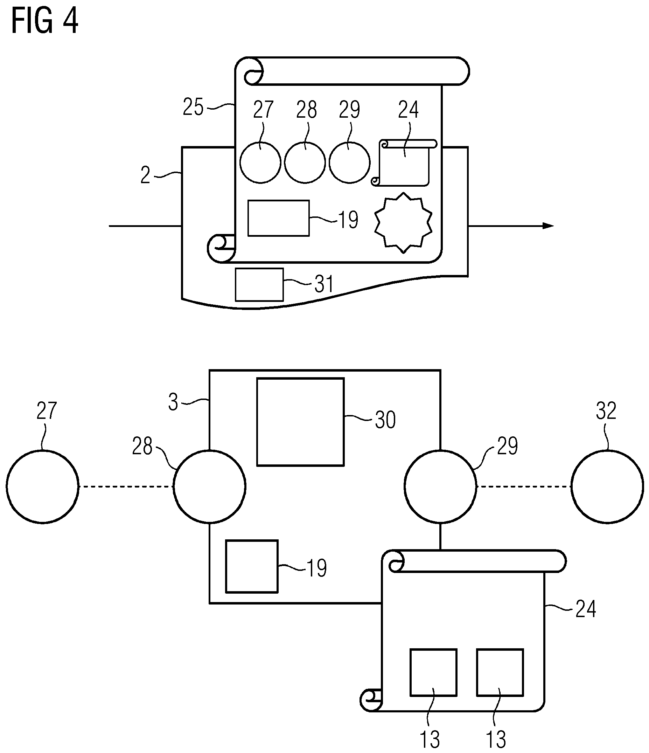

FIG. 4 shows a schematic illustration of a network device 3. The network device 3 may be designed as a hardware device comprising a CPU 30. The network device 3 may also be designed as a software device. The network device 3 may comprise a receiving interface 28 to accept network packets 2 from an interface of preceding network device 27. The network device 3 may also comprise a sending interface 29 to send a network packet 2 to an interface of a following network device 32. The profile 11 of the network device 3 may be stored on the network device 3 and may comprise at least one sustainability related value 13. A predefined path 9 may be stored on the network device 3 comprising addresses of receiving and/or target network devices 3 for transmissions. The network device 3 may be configured to add a tag 12 to the network packet 2 upon reception of the network packet 2. The tag 12 may comprise a reference to the profile 11 of the respective network device 3. The tag 12 may comprise identifiers of the source interface 27, the reception interface 28, and the sending interface 29 in order to log a chain of transmission of the network packet 2. The tag 12 may comprise a digital signature to allow a validation of the tag 12. The tag 12 may also comprise a time-variant sustainability related value 19. The time-variant sustainability related value 19 may comprise a current energy consumption of the network device 3 during transmission of the packet. The target interface for transmission of the network packet 2 may be selected depending on the presence of the sustainability parameter 31 in the control information of the network packet 2.

Network devices 3 may be associated with a profile 11 corresponding to relevant sustainability characteristics or key performance indicators like energy consumption levels, material bill, device lifetime, supply chain characteristics or energy-per-bit in packet processing and forwarding. These profiles 11 may be managed and verified by a trusted entity device 16, e.g., a certification authority, government, or a blockchain. The verification of the respective profiles 11 may comprise a generation of respective digital signatures that may be added to the profiles 11. It is assumed that the profiles 11 may be verified by a target application 5 using the respective certificate of the trusted entity 15. Additional key performance indicators can optionally be included on a local level, e.g., using a non-public local authority.

These profiles 11 may be used in a traffic engineering process by the traffic engineering device 17 of the network 4 to perform optimizations of the paths 9 taking sustainability aspects and the respective key performance indicators into account. The traffic engineering device 17 may be part of the network 4 management and operation system. Traditional traffic engineering key performance indicators such as latency, processing speed, number of hops, may still be utilized in the overall process to select the path 9 for the network packet 2. When the network packet 2 enters the network 4 at the first network device 7 after being sent by the start application 6, the usual labelling and/or forwarding process is being applied by the network devices 3. However, the respective rules have been created by the traffic engineering device 17 of the network 4 to take sustainability targets into account, as described earlier. These targets are either defined as part of the traffic engineering process by the traffic engineering device 17 / network 4 operator itself. The target may demand that all traffic from an application or a network device 3 should exhibit predefined sustainability criteria or should comply with a sustainability criterion 1. The application or user may explicitly demand a compliance with the sustainability criterion 1 by a transmission of the network packet 2 when sending the network packet 2 by inclusion of the sustainability parameter 31 in the network packet 2. The application or user may also explicitly demand a compliance with the sustainability criterion 1 by entering a contract with a network 4 operator of the network 4 e.g. "data plan sustainable music streaming".

Regardless of the approach taken to set the target sustainability profile 11, all network 4 packets 2 traversing the network 4 are tagged by each individual network device 3, creating a record of verifiable profiles 11 of network devices 3 that have been active in the process of delivering the network packet 2. This also holds true if a network packet 2 crosses different networks 4 that are operated by separate entities: the final chain of tags 12 can be validated against the publicly available profiles 11 to retrieve the sustainability footprint of the individual packet.

Profiles 11 are not necessarily confined to physical hardware, they can also be extended to virtualized network 4 functions or applications or parts thereof e.g., in the context of edge computing that are running on specific virtualization environments e.g., with or without hardware acceleration. This allows their utilization in the wider scope of edge and network 4 management and orchestration.

The eco tags 12 associated to a packet may optionally - in addition to the reference to the profiles 11 - include time-variant sustainable related values 19 for certain time-variant key performance indicators, e.g., the current energy efficiency of a virtualization environment hosting a softwarized network 4 function that processed the packet to allow more fine-grained assessment.

The start application 6 may intend to send a network packet 2 to the target application 5 and the traffic engineering device 17 of the network 4 manages the routing along the path 9 according to the application preferences or requirements, e.g., routing / routing protocol of involved network devices 3 is configured. The start application 6 may send the network packet 2 to the first network device 7. The first network device 7 may add a tag 12 to link the profile 11 of the first network device 7 to the network packet 2. The tag 12 may comprise a signature and/or a cryptographic certificate 18. The first network device 7 may forward the network packet 2 to a next network device 3 along the path 9 in a so-called hop.

All involved network devices 3 may add a tag 12 of their respective profiles 11 to the network packet 2. The final network device 8 may send the network packet 2 to the target application 5 after adding the tag 12 of the respective profile 11. As soon as the network packet 2 is received by the target application 5, the target application 5, may validate the tags 12 and/or associated profiles 11 through the predefined validation process. The compliance of the transmission of the network packet 2 with the predefined sustainability criterion 1 related to the transmission may be certified by the target application 5, in the case that each of the tags 12 of the network packet 2 in the procedure is evaluated as valid through the predefined validation process.

The inclusion of the tag 12 of the profile 11 does not necessarily mean that a tag 12 is added to the network packet 2 itself which would lead to an increase of the data volume to be transmitted. The tag 12 associated with the corresponding profile 11 can be added to a local or regional database 20 for later consolidation by either the traffic engineering device 17 or other 3rd party trusted entities for tag 12 and/or profile 11 handling. Of course, there are also other methods for distributed storage or distributed ledger technologies to handle the tags 12 and/or profiles 11 efficiently.

Mixed environments may comprise network devices 3, supporting the labelling with tags 12 to profiles 11, but may also comprise profileless selected network device 10, that do not support profiles 11. In such environments, it may be a challenge to ensure that all involved hops in the data packet route are captured. Thus, the following optional extension can be used.

Each network device 3 may add addresses of interfaces of network devices 22 to the tag 12. The tag 12 may comprise an interface of a preceding network device 27, a receiving interface network device 28 and a sending interface of network device 29. Device addresses can be the MAC addresses. As an example, the network packet 2 may comprise the following chain of tags 12:
network device 1 <Application identifier> | <intern> | A| profile 11 D1
network device 2 A | B | C | profile 11 D2
network device 3 C | D | E | profile 11 D3
network device 4 E | F | <Application Identifier> | profile 11 D4

As soon as a profileless selected network device 10 is included to the route, this chain of source device addresses and sending interface addresses may be interrupted. In both cases the traffic engineering device 17 or the central device 21 may either be configured as a trusted entity device 16 that ensures proper certificate 18 and tag 12 handling in its network 4 domain, but the proposed mechanism also works with a profileless 3rd party trusted entity for certificate and tag 12 handling.

The proposed system enables to track, and monitor online sustainability of digital communication on per payload transfer level e.g. per communication message / packet in contrast to todays per infrastructure e.g. physical communication links, base stations, gateway and typically post mortem analysis. Hereby each individual communication can be optimized according to specific KPIs like in the given sustainability scenario energy efficiency. Depending on the selected KPI criteria an optimal selection of a communication path 9 including the used network device 3 and services for each payload can be selected.

Traffic engineering uses the eco tags 12 to enable optimization according to sustainability criteria like a selection of a greenest route and potentially a certification of the packet as sustainable. Fine-grained per-packet analysis allows different services and levels of sustainability. The certification may ensure a "100% eco routed network 4 package", or a report of the transmission. The target application 5 or an external party may validate the sustainability claim associated to the respective network packet 2, e.g., for audit or reporting purposes as part of a Service-level agreement.

## Claims

1. Method for certifying compliance with a sustainability criterion (1) by a transmission of a network packet (2) via network devices (3) of a network (4), wherein
- the network packet (2) to be send to a target application (5), is created by a start application (6),
- the network packet (2) is transmitted to a first network device (7) of the network devices (3) of the network (4) by the start application (6),
- the network packet (2) is transmitted from the first network device (7) to a final network device (8) of the network devices (3), wherein the network packet (2) is sequentially transmitted along a selected path (9) of selected network devices (3), connecting the first network device (7) to the final network device (8), by the selected network devices (3),
- the network packet (2) is sent to the target application (5) by the final network device (8) of the network devices (3) of the network (4) and received by the target application (5),
**characterized in that**
- upon reception of the network packet (2) by a respective selected network device (10) of the selected network devices (3), a respective tag (12) linking to a respective profile (11) of the respective selected network device (10) is associated with the network packet (2) by the respective selected network device (10), wherein
the respective profile (11) comprises at least one predefined sustainability related value of the respective selected network device (10),
- upon reception of the network packet (2) by the target application (5), the tags (12) linking the respective profiles (11) to the network packet (2) are checked by means of a pre-defined validation process by the target application (5), and
- the compliance of the transmission of the network packet (2) with the predefined sustainability criterion (1) related to the transmission is certified by the target application (5), in the case that each of the tags (12) of the network packet (2) in the procedure is evaluated as valid through the predefined validation process.

2. Method according to claim 1, **characterized in that** the predefined validation process by the target application (5) comprises a check of the sustainability related values of the profiles (11) related to the selected network devices (3) by the target application (5), wherein the compliance of the transmission of the network packet (2) with the predefined sustainability criterion (1) related to the transmission is solely certified by the target application (5), if each of the sustainability related values (13) of the profiles (11) related to the selected network devices (3) used for the transmission fulfil a predefined sustainability criterion (1) related to the network devices (3)

3. Method according to claim 1 or 2, **characterized in that** the at least one predefined sustainability related value (13) of the respective selected network device (10), comprises an energy consumption level, information about at least one material used in the respective selected network device (10), an age of the device, an expected remaining or total lifetime of the device, a supply chain characteristic, a fabrication method used to produce the respective selected network device (10) and/or an energy-per-bit consumption in packet processing and forwarding of the respective selected network device (10).

4. Method according to one of the preceding claims, **characterized in that** the profiles (11) of the respective selected network device (10) are digitally signed by a certificate of a trusted entity (15) of a predefined trusted entity device (16), wherein the profiles (11) are checked through the pre-defined validation process by the target application (5), wherein the compliance of the transmission of the network packet (2) with the predefined sustainability criterion (1) related to the transmission is solely certified by the target application (5), if each of the profiles (11) is considered valid.

5. Method according to one of the preceding claims, **characterized in that** the selected path (9) of the selected network devices (3), connecting the first network device (7) to the final network device (8), is selected by a traffic engineering device (17) of the network (4), according to a predefined path (9) selection method, depending on the at least one pre-defined sustainability related value (13) of the respective selected network devices (3) in order to comply with the sustainability criterion (1).

6. Method according to one of the preceding claims, **characterized in that**
- a sustainability parameter (31) that demands fulfilment of the sustainability criterion (1) is included in the network (4) package by the start application (6),
- the presence of the requirement parameter is checked by the network devices (3), and
- the network (4) package is transmitted along the path (9) by the network devices (3) in case the sustainability parameter (31) is included in the network packet (2).

7. Method according to one of the preceding claims, **characterized in that** the predefined sustainability related value, related to the transmission (14) of the network packet (2), is calculated by the target application (5) from the at least one predefined sustainability related value (13) of the profiles (11) linked to the network packet (2).

8. Method according to one of the preceding claims, **characterized in that** upon reception of the network packet (2) by the target application (5), the tags (3) linked to the network packet (2) are checked through the predefined validation process by the target application (5) by means of public keys of the respective profiles (18), wherein the compliance of the transmission of the network packet (2) with the predefined sustainability criterion (1) related to the transmission is solely certified by the target application (5), if each of the tags (3) is considered valid.

9. Method according to one of the preceding claims, **characterized in that** the respective links to a profile (11) comprise a time-variant sustainability related value of the time of processing the packet by the respective selected network device (10).

10. Method according to one of the preceding claims, **characterized in that** the respective links to a profile (11) are added to a central database (20) stored on a central device (21) by the respective selected network device (10).

11. Method according to one of the preceding claims, **characterized in that**
the network packet (2) is transmitted by at least one profileless selected network device (10), wherein
- upon reception of the network packet (2) by the at least one profileless selected network device (23), a respective substitute profile (24) of the at least one profileless selected network device (23) is linked to the network packet (2) by an administrator device (26) of the profileless selected network device (23).

12. Network (4) configured to certify compliance with a sustainability criterion (1) by a transmission of a network packet (2) via network devices (3) of a network (4), wherein The network (4) comprises a start application (6) configured to create the network packet (2) to be send to a target application (5), wherein the start application (6) is configured to transmit the network packet (2) to a first network device (7) of the network devices (3) of the network (4),
- the system is configured to transmit the network packet (2) from the first network device (7) to a final network device (8) of the network devices (3), in a sequential transmission along a selected path (9) of selected network devices (3), connecting the first network device (7) to the final network device (8), by the selected network devices (3),
- the final network device (8) of the network devices (3) of the network (4) is configured to send the network packet (2) to the target application (5) received by the target application (5),
the target application (5) is configured to receive the network packet (2),
**characterized in that**
- the selected network device (10) is configured to associate a respective tag (12) linking to a respective profile (11) of the respective selected network device (10) with the network packet (2) upon reception of the network packet (2) by a respective selected network device (10) of the selected network device (10), wherein
the respective profile (11) comprises at least one predefined sustainability related value of the respective selected network device (10),
- the target application (5) is configured to check the tags (12) linking the respective profiles (11) to the network packet (2) by means of a predefined validation process by the target application (5) upon reception of the network packet (2) by the target application (5), and
- to certify the compliance of the transmission of the network packet (2) with the predefined sustainability criterion (1) related to the transmission, in the case that each of the tags (12) of the network packet (2) in the procedure is evaluated as valid through the predefined validation process.

13. Network device (3) of a network (4) according to claim 12.

14. Target application (5) of a network (4) according to claim 12.

15. Traffic engineering device (17) of a network (4) according to claim 12.
